# EUROPEAN PATENT APPLICATION

(11) **EP 4 470 816 A1**
(43) Date of publication of application: **04.12.2024**
(21) Application number: 24178729.0
(22) Date of filing: 29.05.2024
(51) Int. Cl.: B60L 3/12, B60L 50/60, B60L 58/16, B60L 3/00

(54) **BATTERY-SWAPPABLE ELECTRIC VEHICLE AND MAINTENANCE METHOD THEREOF**

(30) Priority: 31.05.2023 US 202363505236 P
(71) Applicant: Gogoro Inc., Wanchai, Hong Kong (CN)
(72) Inventor: LEE, Yi-Cheng, 333 Taoyuan City (TW); WU, Yu-Lin, 333 Taoyuan City (TW); CHEN, Chien-Hua, 333 Taoyuan City (TW); WANG, Hsiao-Chun, 333 Taoyuan City (TW)
(74) Representative: Viering, Jentschura & Partner mbB Patent- und Rechtsanwälte

(57) **Abstract**

A maintenance method is applied to a battery-swappable electric vehicle having an NFC dynamic tag module. The maintenance method includes: retrieving a vehicle identification data of the battery-swappable electric vehicle at a diagnostic system; querying a server for a configuration data associated with the vehicle identification data; writing the vehicle identification data and the configuration data to a new NFC dynamic tag module through NFC; retrieving a new tag identification data from the new NFC dynamic tag module through NFC; writing the new tag identification data to the swappable battery through NFC; providing the new tag identification data to the server, so as to associate the new tag identification data with the vehicle identification data; and replace the NFC dynamic tag module with the new NFC dynamic tag module.

## Description

### BACKGROUND

### Technical Field

The present disclosure relates to a battery-swappable electric vehicle and a maintenance method thereof.

### Description of Related Art

The ECU (Electronic Control Unit) of an electric scooter is one of the core components of the electric scooter and is responsible for controlling the operation of the electric motor, battery, charging and other systems. For example, the ECU is configured to execute verification on the connected swappable battery, and when the verification is passed, control the discharge of the swappable battery to provide the power required for driving the electric scooter. However, the ECU has some shortcomings, such as: (1) it increases the cost of the electric scooter; (2) it has a complex structure, involving electronic components and corresponding firmware, making maintenance difficult; and (3) the ECU must be powered to start and execute the verification, but the swappable battery will not actively release power to the electric scooter before passing the verification, which requires the electric scooter to be equipped with an additional starting battery to provide starting power.

Accordingly, how to provide a battery-swappable electric vehicle and a maintenance method thereof to solve the aforementioned problems becomes an important issue to be solved by those in the industry.

### SUMMARY

An aspect of the disclosure is to provide a battery-swappable electric vehicle and a maintenance method that can efficiently solve the aforementioned problems.

According to an aspect of the disclosure, a battery-swappable electric vehicle includes a motor, a motor control unit, and a battery interface module. The motor control unit is connected to the motor and is configured to control operations of the motor. The battery interface module is electrically connected to the motor control unit and includes an electrical connector and an NFC dynamic tag module. The electrical connector is configured to be detachably connected to a swappable battery to deliver power from the swappable battery to the motor control unit. The NFC dynamic tag module is configured to provide a vehicle identification data to the swappable battery through NFC. The swappable battery is configured to allow discharge when the vehicle identification data is verified.

According to an aspect of the disclosure, a maintenance method is applied to a battery-swappable electric vehicle. The battery-swappable electric vehicle includes a motor control unit and a first battery interface module detachably connected to a swappable battery. The first battery interface module includes a first NFC dynamic tag module. The maintenance method includes: retrieving a vehicle identification data of the battery-swappable electric vehicle at a diagnostic system; querying a server for configuration data associated with the vehicle identification data; writing the vehicle identification data and the configuration data to a second NFC dynamic tag module through NFC; retrieving a second tag identification data from the second NFC dynamic tag module through NFC; writing the second tag identification data to the swappable battery through NFC; providing the second tag identification data to the server, so as to associate the second tag identification data with the vehicle identification data; and replacing the first NFC dynamic tag module with the second NFC dynamic tag module.

To sum up, according to the battery-swappable electric vehicle of the present disclosure, it uses the NFC dynamic tag module to verify and exchange data with the swappable battery. Therefore, the battery-swappable electric vehicle without an ECU can still complete verification with the swappable battery and make the swappable battery discharge, thereby reducing the overall cost. According to the maintenance method of the present disclosure, it provides solutions for diagnosis, replacement, and data updating of the above-mentioned battery-swappable electric vehicle, thereby reducing the maintenance complexity and shortening the maintenance time.

The above is only used to describe the problems to be solved by the present disclosure, technical solutions to solve the problems and their effects, and so on. Specific details of the present disclosure will be described in the following aspects with reference to relevant drawings.

### BRIEF DESCRIPTION OF THE DRAWINGS

In order to make the above and other purposes, features, advantages, and aspects of the present disclosure easier to understand, the accompanying drawings are provided and described as follows.
Fig. 1 is a schematic diagram of an appearance of a battery-swappable electric vehicle according to an aspect of the present disclosure;
Fig. 2 is a schematic diagram of an appearance of a battery barrel and a battery interface module according to an aspect of the present disclosure;
Fig. 3 is a structural diagram of the battery-swappable electric vehicle according to an aspect of the present disclosure;
Fig. 4 is a flowchart of a maintenance method according to an aspect of the present disclosure;
Fig. 5A is a maintenance schematic diagram of the maintenance method;
Fig. 5B is a maintenance schematic diagram of the maintenance method;
Fig. 5C is a maintenance schematic diagram of the maintenance method;
Fig. 5D is a maintenance schematic diagram of the maintenance method;
Fig. 5E is a maintenance schematic diagram of the maintenance method;
Fig. 6 is a partial flowchart of the maintenance method according to another aspect of the present disclosure;
Fig. 7 is a maintenance schematic diagram of the maintenance method;
Fig. 8 is a partial flowchart of the maintenance method according to another aspect of the present disclosure;
Fig. 9 is a maintenance schematic diagram of the maintenance method; and
Fig. 10 is a partial flowchart of the maintenance method according to another aspect of the present disclosure.

### DETAILED DESCRIPTION

A plurality of aspects of the present disclosure will be described below with reference to the accompanying drawings. For the sake of clarity, many practical details will be described together in the following description. However, it should be understood that these practical details should not be used to limit the present disclosure. That is to say, in some aspects of the present disclosure, these practical details are not necessary. In addition, for the sake of simplifying the accompanying drawings, some commonly used structures and components are illustrated in the accompanying drawings in a simple schematic manner.

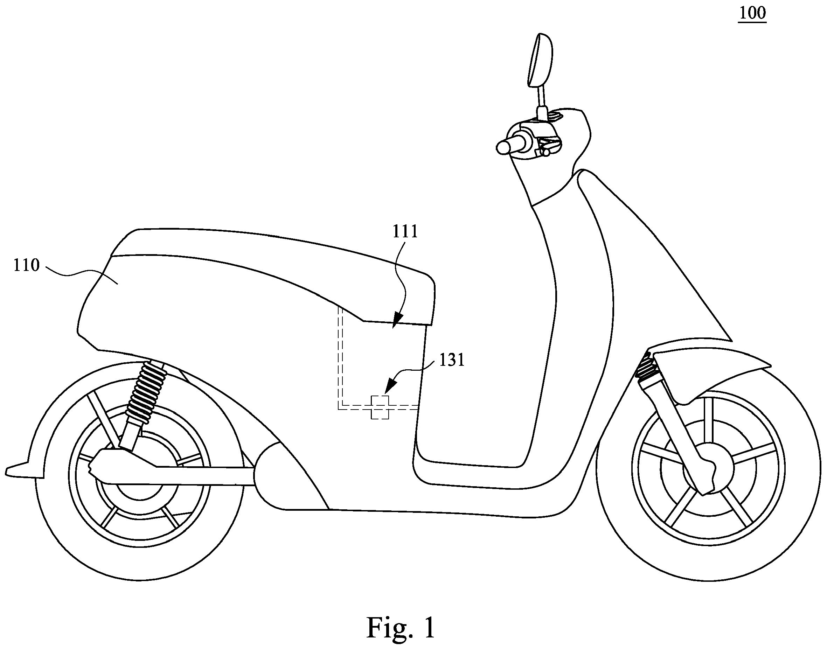

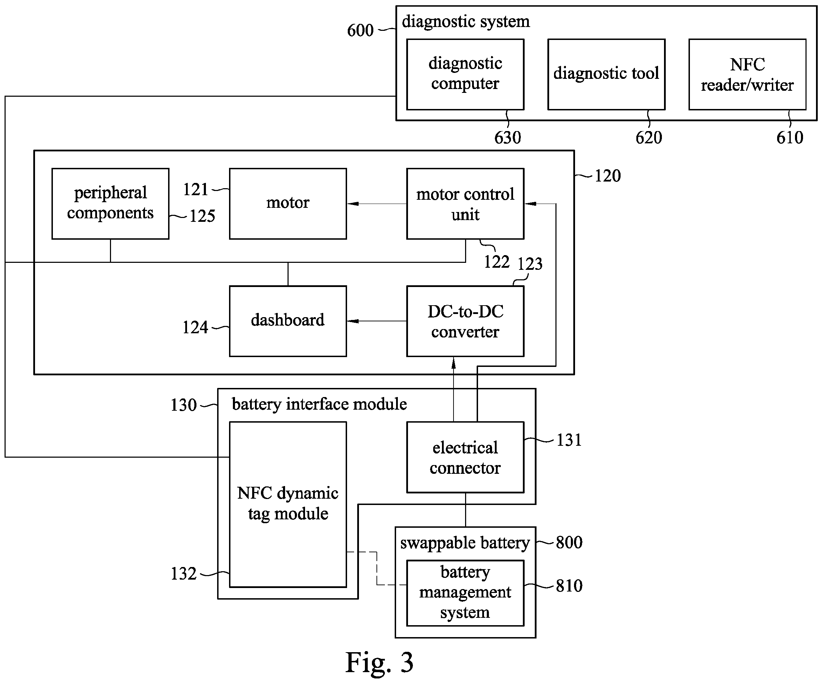

As shown in Fig. 1, a battery-swappable electric vehicle 100 includes a body 110. The body 110 includes a battery barrel 111. An electrical connector 131 is provided in the battery barrel 111. In some aspects, the accommodating space in the battery barrel 111 can be used as a battery compartment for accommodating an external swappable battery 800 (see Fig. 3), and the electrical connector 131 is configured to establish an electrical connection between a power system of the battery-swappable electric vehicle 100 and the swappable battery 800.

It is worth mentioning that the location of the battery barrel 111 can be changed according to needs (such as storage space or weight distribution), and is not limited to being located in the front of the vehicle's compartment (Fig. 1). In some aspects, the battery barrel 111 may be disposed under the footrest, on the steering, or above the rear wheel of the battery-swappable electric vehicle 100.

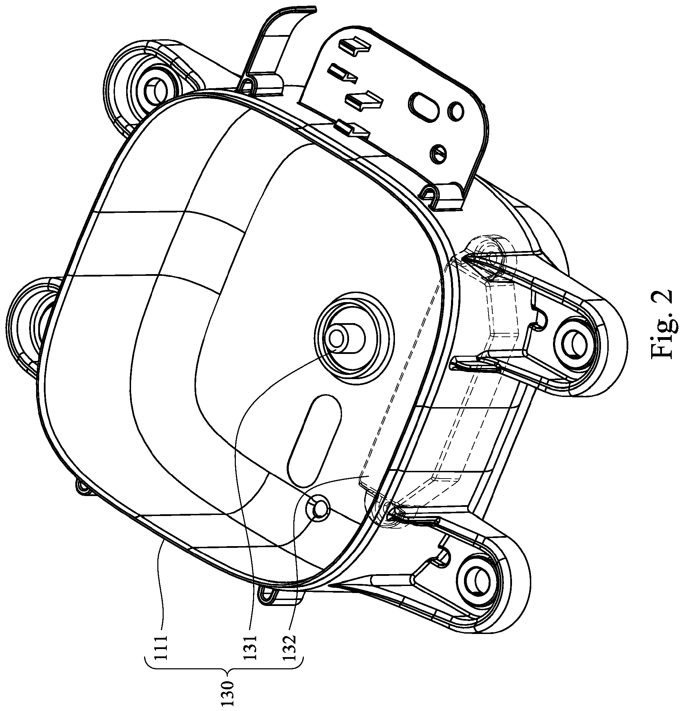

Please refer to Figs. 2 and 3 together. In the present aspect, the battery-swappable electric vehicle 100 includes a host system 120 and a battery interface module 130. The host system 120 is disposed in the body 110 and includes a motor 121, a MCU (motor control unit) 122, a DC-to-DC converter 123, a dashboard 124, and peripheral components 125 (such as Cellular network module, Bluetooth module, lock module, light module, throttle module, brake module, etc.). The MCU 122 is connected to the motor 121 and configured to control operations of the motor 121. The motor 121 is operatively connected to a wheel of the battery-swappable electric vehicle 100 to drive the battery-swappable electric vehicle 100 to move forward or reverse. The battery interface module 130 includes the aforementioned electrical connector 131 and an NFC dynamic tag module 132. Specifically, the electrical connector 131 of the battery interface module 130 is configured to detachably connect to an electrical connector (not shown) of the swappable battery 800 to deliver the power of the swappable battery 800 to the MCU 122. The electrical connector 131 also provides power to the dashboard 124 and peripheral components 125 respectively via one or more DC-to-DC converters 123. The NFC dynamic tag module 132, the MCU 122, the dashboard 124, and the peripheral components 125 are electrically connected to each other through a transmission line, such as a CAN (Controller Area Network) bus, so that data can be transferred.

Next, the technical problems solved and the technical effects achieved by the present disclosure using the NFC dynamic tag module 132 will be described. NFC technology includes two interaction methods: a Peer-to-Peer mode and a Read/Write mode.

In the Peer-to-Peer mode, an NFC device establishes a Peer-to-Peer connection with another NFC device, and delivers data through the Peer-to-Peer connection. The above-mentioned NFC devices must be connected to external power, which will increase the cost and complexity of the power system. Electric scooters with ECUs usually use this solution, so that the ECUs and swappable batteries can exchange data through the above-mentioned Peer-to-Peer connection.

In the Read/Write mode, an NFC device executes read/write operations on an NFC tag. Specifically, the above-mentioned NFC device is the initiator of interaction (Active Part), such as an NFC reader/writer, and requires external power. The above-mentioned NFC tag is the receiver of interaction (Passive Part). When being read or written, the NFC tag can induct the radio waves emitted by the NFC device to retrieve the induction power required for operation without requiring external power.

Although using NFC tags has the advantages of being cheap and simplifying the power system, the NFC tags have disadvantages such as the inability to deliver data between multiple devices and poor communication quality.

In order to solve the above problems, the present disclosure uses the NFC dynamic tag module 132. The NFC dynamic tag module 132 includes a wired connection module, an NFC antenna module, a storage (such as a flash memory), and a read/write control circuit electrically connected to the above components. The MCU 122, the dashboard 124, and the peripheral components 125 (hereinafter referred to as electric vehicle components) are connected to the wired connection module through a transmission line (such as CAN Bus) and configured to access the storage (at this time, the power source of the NFC dynamic tag module 132 can be the electric vehicle components, the DC-to-DC converter 123, or other power-supply components). An NFC device (not shown in the figures, such as an NFC chip module described later) of the swappable battery 800 is configured to access the storage through the NFC antenna module.

In this way, when the NFC dynamic tag module 132 is powered (e.g., the battery-swappable electric vehicle 100 is started), the electric vehicle components and the swappable battery 800 can read and write the storage of the NFC dynamic tag module 132 through wired and wireless means respectively. By using the storage as a storage intermediary, the electric vehicle components and the swappable battery 800 can exchange data. When the NFC dynamic tag module 132 is powered off (e.g., the battery-swappable electric vehicle 100 is powered off), the swappable battery 800 can read the storage of the NFC dynamic tag module 132 through the wireless mean (reader mode) to execute verification, and can be allowed to be discharged to the battery-swappable electric vehicle 100 after the verification is completed, that is, no starting battery is needed to provide starting power.

As show in Figs. 2 and 3, in the present aspect, the swappable battery 800 includes a battery management system 810, which includes hardware (such as a controller and related electronic components) and software (such as an operating system and firmware) that can execute together. The NFC dynamic tag module 132 provides a vehicle identification data to the battery management system 810 of the swappable battery 800 through NFC (that is, the swappable battery 800 includes an NFC chip module). The battery management system 810 of the swappable battery 800 is configured to allow discharge (MOS on) when the vehicle identification data is verified. At this time, power can be output from the swappable battery 800 to the MCU 122 via the electrical connector 131, and sequentially output to the dashboard 124 and the peripheral components 125 via the electrical connector 131 and the DC-to-DC converter 123.

As shown in Fig. 2, in the present aspect, the electrical connector 131 and the NFC dynamic tag module 132 are disposed at the bottom of the battery barrel 111 and integrated into the battery interface module 130. When the swappable battery 800 is placed in the battery barrel 11 and electrically connected to the electrical connector 131, the NFC device (not shown in the figures) of the swappable battery 800 and the NFC dynamic tag module 132 are within the NFC communication range. In this way, when a certain component of the battery interface module 130 needs to be repaired, a maintenance personnel can directly repair the component at the battery barrel 111; when the battery interface module 130 needs to be replaced, the maintenance personnel can replace the entire battery interface module 130, thereby increasing the convenience of maintenance.

As shown in Fig. 3, the present disclosure provides a diagnostic system 600 for maintaining and repairing the above-mentioned battery-swappable electric vehicle 100. Specifically, the diagnostic system 600 includes a diagnostic tool 620, an NFC reader-writer 610, and a diagnostic computer 630. The diagnostic tool 620 has a hub function and is configured to connect the NFC reader-writer 610, the diagnostic computer 630, the electric vehicle components, and the swappable battery 800. The diagnostic tool 620 is provided with an NFC device and multiple connectors to enable the above-mentioned connections. The diagnostic computer 630 is installed with a diagnostic program, and can collect data on the battery-swappable electric vehicle 100 and/or the swappable battery 800 through the diagnostic tool 620 and execute diagnosis. The NFC reader-writer 610 serves as an NFC extension device of the diagnostic tool 620 (e.g., through an external connection), and is configured to be placed in the battery barrel 111 to read and write the NFC dynamic tag module 132. The diagnostic computer 630 is, for example, a notebook, a tablet, or a smart phone, but is not limited thereto.

In some aspects, the battery-swappable electric vehicle 100 includes a diagnostic connector (such as a USB connector). The diagnostic connector is configured to connect to the diagnostic tool 620 of the diagnostic system 600 through a transmission line (such as a USB cable), and to connect to the electric vehicle components through a transmission line (such as a CAN bus). In some aspects, the diagnostic connector may be disposed at the same or adjacent location as the MCU 122, but is not limited to this.

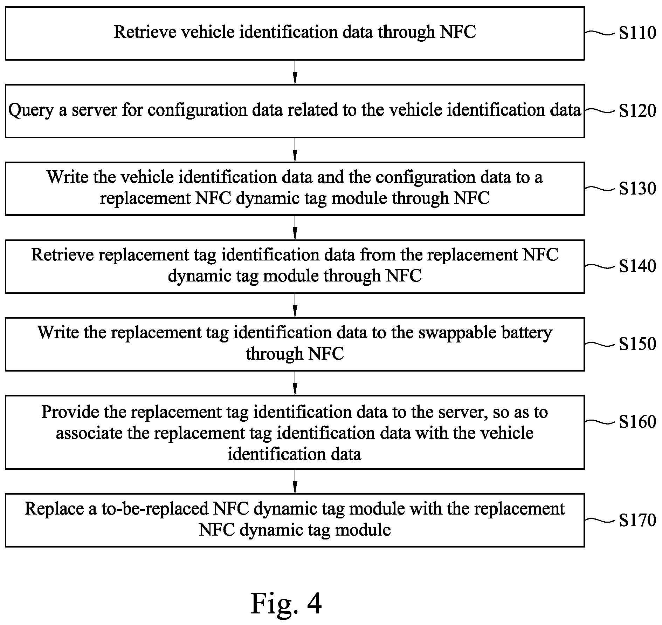

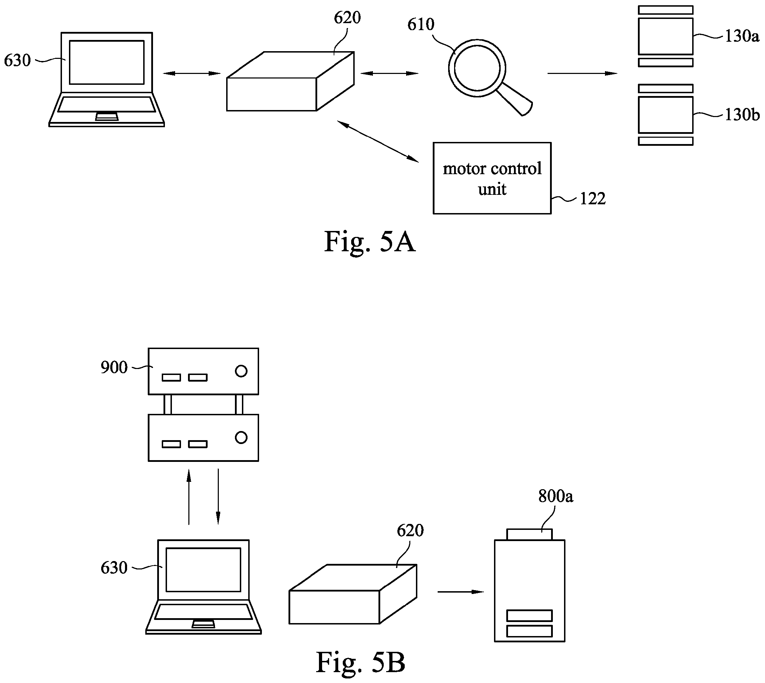

Please refer to Fig. 4 together with Figs. 5A to 5E. The present disclosure also provides a maintenance method, which is to repair the above-mentioned battery-swappable electric vehicle 100 through the above-mentioned diagnostic system 600.

As shown in Fig. 5A, the maintenance personnel can use the diagnostic computer 630 to read data from the NFC dynamic tag module 132 of a battery interface module 130a of the battery-swappable electric vehicle 100 through the diagnostic tool 620 and the NFC reader-writer 610, and can retrieve data by connecting the electric vehicle components (herein, diagnosis through the MCU 122 is taken as an example, but this is not limited to the electric vehicle components used for diagnosis) of the battery-swappable electric vehicle 100 through the diagnostic tool 620 and a maintenance connector. When a fault condition is detected in the to-be-replaced battery interface module 130a, the to-be-replaced battery interface module 130a needs to be replaced. For example, the fault condition includes: (1) the to-be-replaced battery interface module 130a is powered normally, but the NFC dynamic tag module 132 has no communication; (2) the CAN bus between the NFC dynamic tag module 132 and the MCU 122 does not work; and (3) the to-be-replaced battery interface module 130a fails to provide power (which can be detected by a multimeter).

Steps S110 to S170 of the maintenance method are to replace the entirely failed to-be-replaced battery interface module 130a (a first battery interface module) with an available replacement battery interface module 130c (a second battery interface module), or to replace only the failed to-be-replaced NFC dynamic tag module (a first NFC dynamic tag module) with an available replacement NFC dynamic tag module (a second NFC dynamic tag module).

Step S110: the maintenance personnel operate the diagnostic system 600 to retrieve a vehicle identification data (such as Subscription-ID, User-ID, or n Vehicle-ID) through NFC.

In some aspects, as shown in Fig. 5A, the battery-swappable electric vehicle 100 includes a plurality of battery interface modules, such as the failed to-be-replaced battery interface module 130a and the available battery interface module 130b. The maintenance personnel retrieve the vehicle identification data from the NFC dynamic tag module 132 of the available battery interface module 130b through the NFC reader-writer 610.

In some aspects, as shown in Fig. 5B, a swappable battery 800a bound to the battery-swappable electric vehicle 100 stores the vehicle identification data. The maintenance personnel can use the diagnostic computer 630 to retrieve the vehicle identification data from the swappable battery 800a through the battery-reading-writing device (NFC device) of the diagnostic tool 620.

Step S120: the diagnostic system 600 queries the server 900 for a configuration data associated with the vehicle identification data.

As shown in Fig. 5B, the maintenance personnel can use the diagnostic computer 630 to connect to the server 900 via the intranet or the Internet to query the server 900 for the configuration data associated with the vehicle identification data. The above-mentioned configuration data is, for example, configuration parameters of the NFC dynamic tag module 132, vehicle configuration parameters and data, battery configuration parameters and data, firmware version, etc.

Step S130: the diagnostic system 600 writes the vehicle identification data and the configuration data to a replacement NFC dynamic tag module of a replacement battery interface module 130c through NFC.

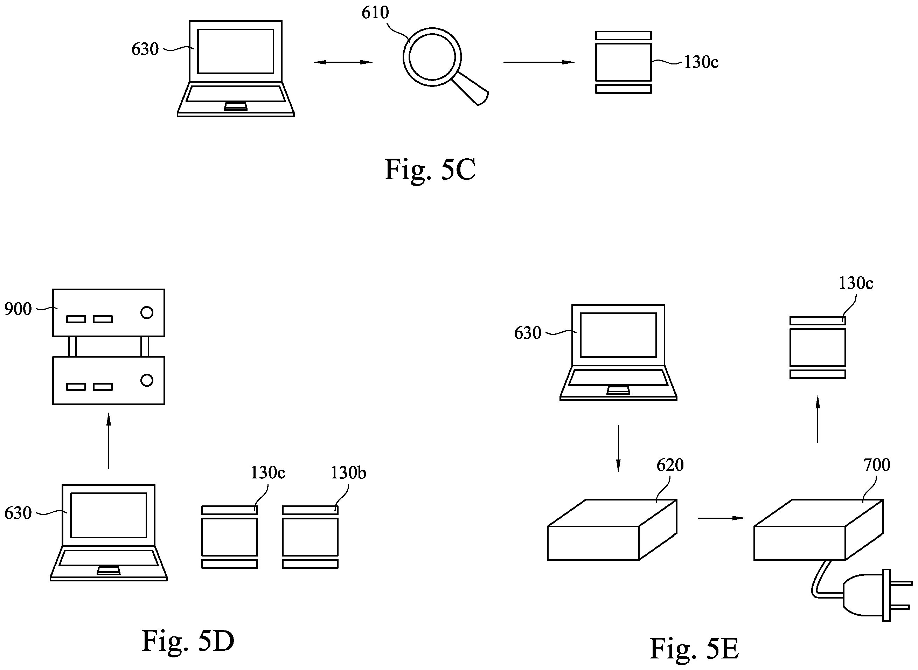

As shown in Fig. 5C, the maintenance personnel can use the diagnostic computer 630 to write the configuration data of the associated vehicle identification data retrieved from the server 900 to the replacement battery interface module 130c through the diagnostic tool 620 and the NFC reader-writer 610. In this way, the replacement battery interface module 130c used to replace the to-be-replaced battery interface module 130a can be bound to the battery-swappable electric vehicle 100.

Step S140: the diagnostic system 600 retrieves the replacement tag identification data (such as NFC UID) from the replacement battery interface module 130c through NFC.

As shown in Fig. 5C, the maintenance personnel can use the diagnostic system 600 to retrieve the replacement tag identification data from the replacement battery interface module 130c through the diagnostic tool 620 and the NFC reader-writer 610.

Step S150: the diagnostic system 600 writes the replacement tag identification data to the swappable battery 800a through NFC.

As shown in Fig. 5B, the maintenance personnel can use the diagnostic computer 630 to write the replacement tag identification data retrieved from the replacement battery interface module 130c to the swappable battery 800a through the diagnostic tool 620.

Step S160: the diagnostic system 600 provides the replacement tag identification data to the server 900, so as to associate the replacement tag identification data with the vehicle identification data.

As shown in Fig. 5D, the maintenance personnel can use the diagnostic computer 630 to provide the replacement tag identification data retrieved from the replacement battery interface module 130c to the server 900, so as to associate the replacement tag identification data with the vehicle identification data. In addition, the diagnostic computer 630 can also provide another tag identification data of the another battery interface module 130b to the server 900 at the same time. In this way, the replacement tag identification data of the replacement battery interface module 130c and the another tag identification data of the another battery interface module 130b can be associated with the vehicle identification data.

Step S170: the maintenance personnel replace the failed to-be-replaced battery interface module 130a in the battery-swappable electric vehicle 100 with the replacement battery interface module 130c that has been set up.

After the replacement tag identification data of the replacement battery interface module 130c is uploaded to the server 900 and associated with the vehicle identification data, it means that the replacement battery interface module 130c has been bound to the battery-swappable electric vehicle 100 and the swappable battery 800a. At this time, the maintenance personnel can disassemble the to-be-replaced battery interface module 130a from the battery-swappable electric vehicle 100, assemble the replacement battery interface module 130c into the battery-swappable electric vehicle 100, and connect the swappable battery 800a to the replacement battery interface module 130c to complete the replacement.

Please refer to Fig. 5E. In some aspects, based on cost considerations, the replacement NFC dynamic tag module that replaces the battery interface module 130c is equipped with a manufacture version firmware (MF code) and cannot be directly used in the battery-swappable electric vehicle 100.

In this regard, the maintenance method of the present disclosure can be added a power connection step and a burning step as needed after the replacement NFC dynamic tag module leaves the factory and before it is installed on the battery-swappable electric vehicle 100 (such as before the above step S130), so as to change the manufacture version firmware to a commercial version firmware (Commercial code) which can be directly used in the battery-swappable electric vehicle 100.

The power connection step: the maintenance personnel supply power to the replacement NFC dynamic tag module of the battery interface module 130c through a fixture 700 so that the replacement NFC dynamic tag module is writable. Specifically, since the replacement NFC dynamic tag module has not yet been installed in the battery-swappable electric vehicle 100, there is no power source and it is unable to be burned. In this regard, the maintenance personnel can connect the fixture 700 to the power supply (such as the utility power) and the diagnostic tool 620, and connect the replacement NFC dynamic tag module through a transmission line (such as a bus that can deliver power and data at the same time). In this regard, the diagnostic computer 630 can deliver data to the replacement NFC dynamic tag module through the diagnostic tool 620 and the fixture 700. Moreover, instead of the NFC dynamic tag module, the fixture 700 can retrieve the power required for data reading and writing.

The burning step: the diagnostic computer 630 burns the commercial version firmware to the replacement NFC dynamic tag module through the diagnostic tool 620 and the fixture 700 so that it can be used in the battery-swappable electric vehicle 100. In some aspects, the diagnostic computer 630 overwrites or modifies the file of the manufacture version firmware in the NFC dynamic tag module with a complete or partial firmware file (commercial version). In some aspects, the diagnostic computer 630 replaces the firmware configurations in the NFC dynamic tag module with commercial configuration parameters, so that the manufacture version firmware is converted to the commercial version firmware.

In some aspects, with reference to Fig. 3, the MCU 122 of the battery-swappable electric vehicle 100 is detected to have a fault and needs to be replaced. At this time, the maintenance method of the present disclosure can be added a backup step, a replacement step, and a recovery step as needed to quickly replace the to-be-replaced MCU 122 (a first MCU) with the replacement MCU (a second MCU).

The backup step: in the battery-swappable electric vehicle 100, the to-be-replaced MCU stores the motor control configuration data in the NFC dynamic tag module 132 when it is still available. The execution of the above backup step can be scheduled, triggered by instructions or conditions (such as after each maintenance or when an error code is generated).

The replacement step: when the to-be-replaced MCU 122 fails, the maintenance personnel can replace the failed to-be-replaced MCU 122 with the replacement MCU. Specifically, the maintenance personnel can disassemble the to-be-replaced MCU 122 from the battery-swappable electric vehicle 100 and then assemble the replacement MCU into the battery-swappable electric vehicle 100.

The recovery step: in the battery-swappable electric vehicle 100, the replacement MCU reads the previously backed up configuration data by the NFC dynamic tag module 132, and completes the setting according to the configuration data. In this way, the maintenance personnel can quickly and automatically transfer all the configurations of the failed to-be-replaced MCU 122 to the available replacement MCU without resetting.

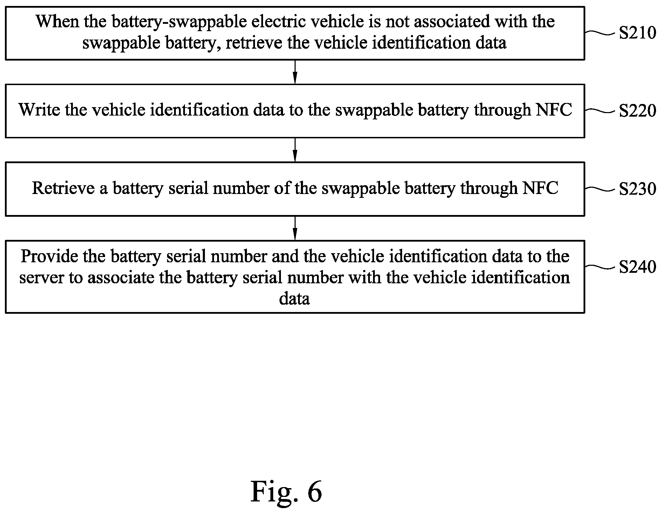

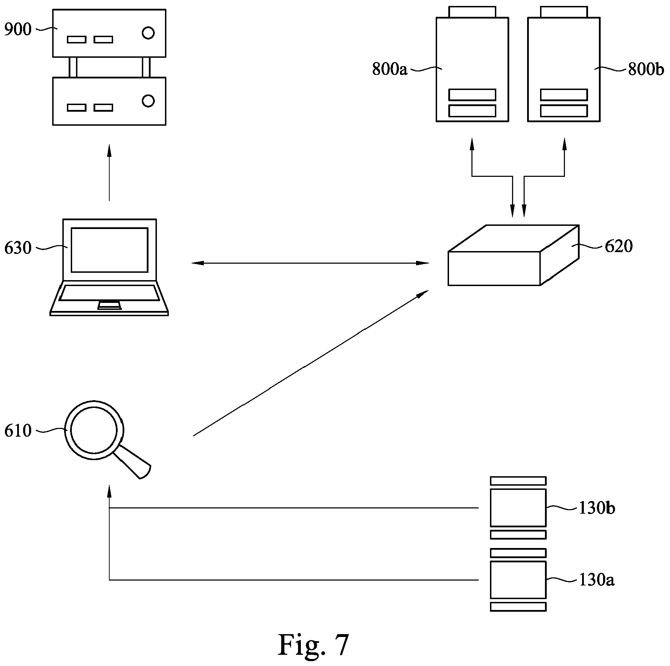

Please refer to Figs. 6 and 7 together. For safety reasons, the swappable battery 800 needs to be bound to the battery-swappable electric vehicle 100 before the bound battery-swappable electric vehicle 100 can be discharged. In this regard, the maintenance method of the present disclosure can be added a battery-pairing process shown in step S210 to step S240 as needed. In a pre-delivery inspection (PDI) stage, the maintenance method disclosed in the present disclosure can bind the swappable battery 800 to the battery-swappable electric vehicle 100 through the above-mentioned battery-pairing process, so that the swappable battery 800 allows the battery-swappable electric vehicle 100 to discharge. It is worth mentioning that although the subsequent description takes the battery-swappable electric vehicle 100 as having two sets of battery interface modules 130a and 130b and can connect two swappable batteries 800a and 800b at the same time, the number of battery interface modules installed in the battery-swappable electric vehicle 100 at the same time and the number of swappable batteries that can be connected at the same time can be arbitrarily changed according to needs and are not limited to this.

Step S210: when the battery-swappable electric vehicle 100 is not associated with the swappable battery 800, the diagnostic system 600 retrieves vehicle identification data.

As shown in Fig. 7, in some aspects, the maintenance personnel can uses the diagnostic computer 630 to retrieve the vehicle identification data from one of the battery interface modules 130a and 130b installed on the battery-swappable electric vehicle 100 through the diagnostic tool 620 and the NFC reader-writer 610.

In some aspects, the maintenance personnel can use the diagnostic computer 630 to retrieve the tag identification data from one of the battery interface modules 130a and 130b through the diagnostic tool 620 and the NFC reader-writer 610, and use the retrieved tag identification data to query the server 900 for the vehicle identification data associated with the tag identification data.

Step S220: the diagnostic system 600 sequentially writes the vehicle identification data to the swappable batteries 800a and 800b through NFC.

As shown in Fig. 7, the maintenance personnel can sequentially place the swappable batteries 800a and 800b to be bound to the battery-swappable electric vehicle 100 to the battery-reading-writing device of the diagnostic tool 620, and write the vehicle identification data queried from the server 900 to the swappable batteries 800a and 800b through the diagnostic computer 630 and the diagnostic tool 620.

Step S230: the diagnostic system 600 retrieves battery serial numbers of the swappable batteries 800a and 800b through NFC.

As shown in Fig. 7, the maintenance personnel can use the diagnostic computer 630 to retrieve the battery serial numbers of the swappable batteries 800a and 800b through the battery-reading-writing device of the diagnostic tool 620.

Step S240: the diagnostic system 600 provides the battery serial numbers and vehicle identification data to the server 900 to associate the battery serial numbers with vehicle identification data.

As shown in Fig. 7, the maintenance personnel can use the diagnostic computer 630 to provide the battery serial numbers bound to the swappable batteries 800a and 800b of the battery-swappable electric vehicle 100 to the server 900 so that the battery serial numbers are associated with the vehicle identification data.

In this way, the data of all components used in the battery-swappable electric vehicle 100 are associated with the same vehicle identification data, which facilitates subsequent query and management.

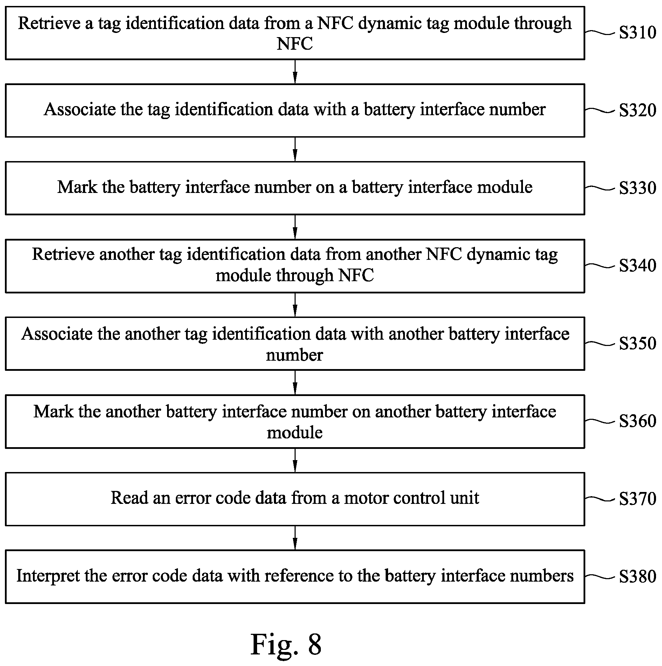

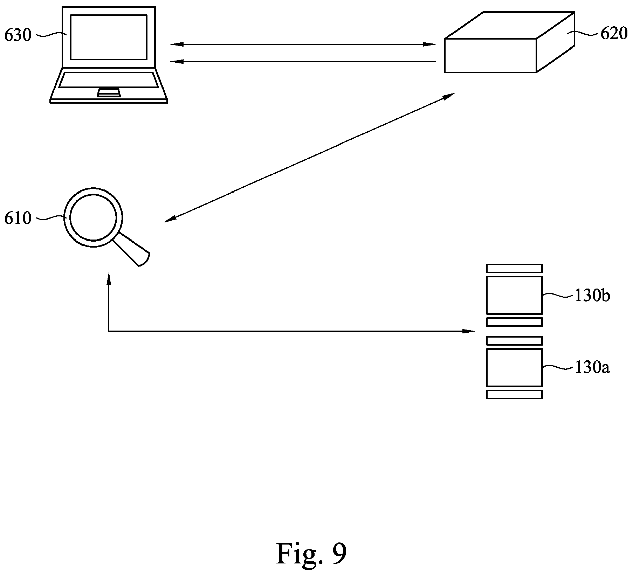

Please refer to Figs. 8 and 9 together. In some aspects, when the battery-swappable electric vehicle 100 has a plurality of battery interface modules 130a and 130b, the multiple battery interface modules 130a and 130b may be identified by battery interface numbers (such as 1, 2, 3..., A, B, C ...etc.) means. This representation method is inconsistent with the label identification data of the battery interface modules 130a and 130b (such as a hexadecimal value with a fixed number of bits), which will cause trouble to the maintenance personnel and even lead to misjudgment and incorrect repair. In this regard, the maintenance method of the present disclosure can be added an identification process shown in step S310 to step S360 before starting diagnosis or maintenance (such as before step S110 above), so that the maintenance personnel can correctly identify the failed battery interface module.

Step S310: the diagnostic system 600 retrieves a tag identification data (a third tag identification data) from an NFC dynamic tag module (a third NFC dynamic tag module) of a first battery interface module 130 (a third battery interface module) of the battery-swappable electric vehicle 100 through NFC.

As shown in Fig. 9, the maintenance personnel can use the diagnostic computer 630 to retrieve the tag identification information from the to-be-replaced battery interface module 130a through the diagnostic tool 620 and the NFC reader-writer 610.

Step S320: the maintenance personnel associate the tag identification data of the first battery interface module 130 with the first battery interface number (e.g., Battery Interface 1) in the diagnostic system 600.

Step S330: the maintenance personnel mark the first battery interface number on the appearance of the first battery interface module 130, such as using a pen or sticker or other temporary marking means. In this way, the maintenance personnel can visually identify the position of the first battery interface module 130.

Step S340: the diagnostic system 600 retrieves a tag identification data (a fourth tag identification data) from a second battery interface module 130 (the fourth battery interface module) of the battery-swappable electric vehicle 100 through NFC.

As shown in Fig. 9, the maintenance personnel can use the diagnostic computer 630 to retrieve another tag identification data from another battery interface module 130b through the diagnostic tool 620 and the NFC reader-writer 610.

Step S350: the maintenance personnel can associate the tag identification data of the second battery interface module 130 with a second battery interface number (e.g., Battery Interface 2) in the diagnostic system 600.

Step S360: the maintenance personnel mark the second battery interface number on the appearance of the second battery interface module 130. In this way, the maintenance personnel can visually identify the position of the second battery interface module 130.

In this way, during subsequent diagnosis and maintenance, when the diagnostic system 600 indicates a battery interface number, the maintenance personnel can quickly correspond to the actual battery interface module 130.

In some aspects, the MCU 122 of the battery-swappable electric vehicle 100 can record an operation-related data (such as log files or error code data) as a reference for subsequent diagnosis and maintenance. Specifically, the maintenance method of the present disclosure can be added a diagnostic process shown in step S370 to step S380 before diagnosis or repair (such as before step S110 above) to diagnose the problem and allow the maintenance personnel to implement the correct maintenance plan.

Step S370: the diagnostic system 600 is connected to the MCU 122 of the battery-swappable electric vehicle 100 through a transmission line and a maintenance connector, and read at least one error code data by the MCU 122. In some aspects, the MCU 122 can store the aforementioned error code data in the storage of the NFC dynamic tag module 132, and the diagnostic system 600 reads the error code data in the storage through the maintenance connector.

As shown in Figs. 3 and 5A, the maintenance personnel can use the diagnostic tool 620 to connect to the diagnostic connector, so that the diagnostic computer 630 reads the error code data by the MCU 122. The above-mentioned error code data may be, for example, an error code indicating an error condition that occurs during the operation of the battery-swappable electric vehicle 100 and a device ID. For example, the error code data is the error code "E005" and the device ID "Battery Interface 1", which means that the error condition "E005" occurred in "Battery Interface 1".

In some aspects, the diagnostic computer 630 can query the corresponding root cause data based on the error code "E005", such as "no response".

In some aspects, a diagnostic look-up table can be recorded in the maintenance manual of the maintenance personnel, so the maintenance personnel can find the root cause data corresponding to the error code data, and carry out maintenance procedures of the battery-swappable electric vehicle 100 accordingly. In some aspects, the diagnostic computer 630 can store the diagnostic look-up table and directly display the root cause data corresponding to the error code data, so as to save the maintenance personnel the work of querying.

In some aspects, the maintenance personnel can query the advanced inspection steps and repairing ways corresponding to this root cause data in the maintenance manual or the diagnostic computer 630.

In some aspects, the diagnostic computer 630 can generate a diagnostic report and output (display or print) or upload it to the server 900. The above diagnostic report can record the error code date, the root cause data, the advanced inspection steps, and the repairing ways, etc. In some aspects, the above-mentioned diagnostic report is uploaded to the server 900 after the maintenance is completed.

In this way, the maintenance method disclosed in the present disclosure can quickly repair the battery-swappable electric vehicle 100 without an ECU.

Step S380: when the device ID relates to the battery interface module 130, the maintenance personnel interpret the error code data with reference to the first battery interface number and the second battery interface number, thereby avoiding incorrectly repairing the normal battery interface module.

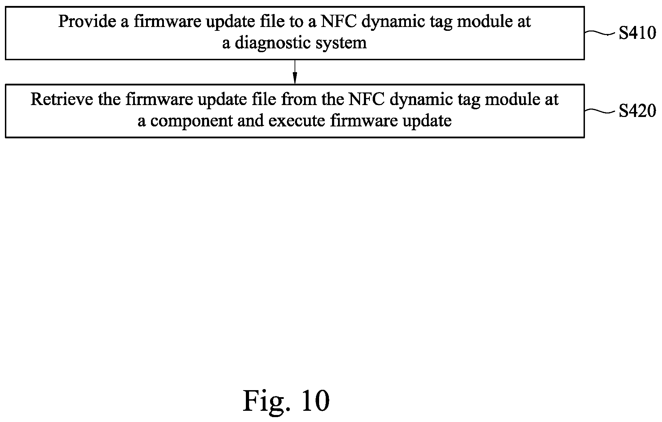

Please also refer to Fig. 10. In some aspects, in order to improve the user experience of the battery-swappable electric vehicle 100, a new version firmware is often released to correct errors or add functions, and there is a need to update the firmware. In this regard, the maintenance method of the present disclosure can be added a firmware update process shown in step S410 to step S420 before or after the maintenance (such as before or after the above-mentioned step S110) to update the firmware of the battery-swappable electric vehicle 100.

Step S410: the diagnostic computer 630 connects the diagnostic connector of the battery-swappable electric vehicle 100 through the transmission line and the diagnostic tool 620, and provides a firmware update file to the storage of the NFC dynamic tag module 132. The above-mentioned firmware update file is a new version firmware including the firmware of one or more electric vehicle components and/or the firmware of the NFC dynamic tag module 132.

Step S420: next, the electric vehicle component (such as the MCU 122) involved in this firmware update file retrieves the firmware update file associated with itself from the storage of the NFC dynamic tag module 132, and executes the firmware update based on the retrieved firmware update file.

The battery-swappable electric vehicle disclosed in the present disclosure can achieve the verification function of the swappable battery without the need for an ECU, which can effectively reduce costs and achieve the same function. The disclosed maintenance method for the above-mentioned battery-swappable electric vehicle can significantly reduce the maintenance complexity and shorten the maintenance time.

## Claims

1. A battery-swappable electric vehicle (100), comprising:
a motor (121);
a motor control unit (122) connected to the motor (121) and configured to control operations of the motor (121); and
a battery interface module (130) electrically connected to the motor control unit (122) and comprising:
an electrical connector (131) configured to be detachably connected to a swappable battery (800) to deliver power from the swappable battery (800) to the motor control unit (122); and
an NFC dynamic tag module (132) configured to provide a vehicle identification data to the swappable battery (800) through NFC,
wherein the swappable battery (800) is configured to allow discharge when the vehicle identification data is verified.

2. The battery-swappable electric vehicle (100) of claim 1, wherein the battery interface module (130) further comprises a battery barrel (111), and the electrical connector (131) and the NFC dynamic tag module (132) are disposed on a bottom of the battery barrel (111), wherein when the swappable battery (800) is placed in the battery barrel (111) and electrically connected to the electrical connector (131), the swappable battery (800) and the NFC dynamic tag module (132) are within an NFC communication range.

3. The battery-swappable electric vehicle (100) of claim 1 or 2, wherein the NFC dynamic tag module (132) comprises a storage and is connected to the motor control unit (122) via a transmission line,
wherein the storage is configured to be accessed by the motor control unit (122) via the transmission line and configured to be accessed by the swappable battery (800) via NFC,
wherein the storage is only able to be read by the swappable battery (800) through NFC when the battery-swappable electric vehicle (100) is powered off.

4. The battery-swappable electric vehicle (100) of claim 3, wherein the swappable battery (800) reads the storage of the NFC dynamic tag module (132) through NFC in a reader mode.

5. The battery-swappable electric vehicle (100) of any of claims 1 to 4, further comprising a diagnostic connector electrically connected to the NFC dynamic tag module (132) and the motor control unit (122) and configured to connect to a diagnostic system (600) via a transmission line.

6. A maintenance method applied to a battery-swappable electric vehicle (100), the battery-swappable electric vehicle (100) comprising a motor control unit (122) and a first battery interface module (130a) detachably connected to a swappable battery (800), the first battery interface module (130a) comprising a first NFC dynamic tag module (132), the maintenance method comprising:
retrieving a vehicle identification data of the battery-swappable electric vehicle (100) at a diagnostic system (600);
querying a server (900) for configuration data associated with the vehicle identification data;
writing the vehicle identification data and the configuration data to a second NFC dynamic tag module (132) through NFC;
retrieving a second tag identification data from the second NFC dynamic tag module (132) through NFC;
writing the second tag identification data to the swappable battery (800) through NFC;
providing the second tag identification data to the server (900), so as to associate the second tag identification data with the vehicle identification data; and
replacing the first NFC dynamic tag module (132) with the second NFC dynamic tag module (132).

7. The maintenance method of claim 6, wherein retrieving the vehicle identification data of the battery-swappable electric vehicle (100) further comprises:
retrieving the vehicle identification data from the swappable battery (800) or another NFC dynamic tag module (132) of another battery interface module (130b) of the battery-swappable electric vehicle (100) through NFC.

8. The maintenance method of claim 7, wherein retrieving the vehicle identification data from the swappable battery (800) through NFC comprises:
when the swappable battery (800) is placed on a diagnostic tool (620) of the diagnostic system (600), retrieving the vehicle identification data from the swappable battery (800) through NFC.

9. The maintenance method of any of claims 6 to 8, further comprising:
before writing the vehicle identification data and the configuration data to the second NFC dynamic tag module (132) through NFC, burning commercial version firmware to the second NFC dynamic tag module (132).

10. The maintenance method of claim 9, wherein before burning the commercial version firmware to the second NFC dynamic tag module (132), the maintenance method further comprises:
powering the second NFC dynamic tag module (132) through a fixture (700) to allow the second NFC dynamic tag module (132) to be writable.

11. The maintenance method of any of claims 6 to 10, wherein the battery-swappable electric vehicle (100) further comprises a first motor control unit (122), and the maintenance method further comprises:
storing a motor control configuration data of the first motor control unit (122) in the first NFC dynamic tag module (132);
replacing the first motor control unit (122) with a second motor control unit; and
reading the motor control configuration data from the first NFC dynamic tag module (132) at the second motor control unit.

12. The maintenance method of any of claims 6 to 11, further comprising:
when the battery-swappable electric vehicle (100) is not associated with the swappable battery (800), retrieving the vehicle identification data at the diagnostic system (600);
writing the vehicle identification data to the swappable battery (800) through NFC;
retrieving a battery serial number of the swappable battery (800) through NFC; and
providing the battery serial number and the vehicle identification data to the server (900) to associate the battery serial number with the vehicle identification data.

13. The maintenance method of any of claims 6 to 12, wherein the battery-swappable electric vehicle (100) further comprises a motor control unit (122), and the maintenance method further comprises:
connecting the diagnostic system (600) to the motor control unit (122) of the battery-swappable electric vehicle (100) through a transmission line;
reading at least one error code data through the motor control unit (122);
generating a diagnostic report based on the at least one error code data; and
providing the diagnostic report.

14. The maintenance method of claim 13, further comprising:
providing a firmware update file to the second NFC dynamic tag module (132) at the diagnostic system (600) through the transmission line; and
retrieving the firmware update file from the second NFC dynamic tag module (132) at an electric vehicle component and executing firmware update.

15. The maintenance method of claim 13 or 14, wherein the battery-swappable electric vehicle (100) comprises a plurality of battery interface modules (130a, 130b), and the maintenance method further comprises:
retrieving a third tag identification data from a third NFC dynamic tag module (132) of a third battery interface module (130a) of the plurality of battery interface modules (130a, 130b) through NFC;
associating the third tag identification data with a first battery interface number;
marking the first battery interface number on the third battery interface module (130a);
retrieving a fourth tag identification data from a fourth NFC dynamic tag module (132) of a fourth battery interface module (130b) of the plurality of battery interface modules (130a, 130b) through NFC;
associating the fourth tag identification data with a second battery interface number;
marking the second battery interface number on the fourth battery interface module (130b); and
interpreting the error code data with reference to the first battery interface number and the second battery interface number.
